# EUROPEAN PATENT SPECIFICATION

(11) **EP 2 438 111 B1**
(45) Date of publication and mention of the grant of the patent: **17.01.2018**
(21) Application number: 10722498.2
(22) Date of filing: 01.06.2010
(51) Int. Cl.: C08J 9/12, C08J 9/00, C08L 25/04

(54) **INFRARED ATTENUATED POLYMERIC FOAM INSULATION WITH FLAME RETARDANT PERFORMANCE**
INFRAROTABGESCHWÄCHTE POLYMERSCHAUMSTOFFISOLIERUNG MIT FLAMMWIDRIGKEIT
MOUSSE POLYMÈRE D'ISOLATION ATTÉNUÉE AUX INFRAROUGES, À PROPRIÉTÉS RETARDATRICES DE FLAMME

(30) Priority: 04.06.2009 US 183990 P
(43) Date of publication of application: 11.04.2012
(73) Proprietor: Dow Global Technologies LLC, Midland, MI 48674 (US)
(72) Inventor: GORDON- DUFFY, John, F-67610 La Wantzenau (FR)
(74) Representative: Beck Greener
(86) International application number: PCT/US2010/036802
(87) International publication number: WO 2010/141400

(56) References cited:
- WO-A2-02/081555
- US-A1- 2008 293 839
- US-A1- 2009 117 358

## Description

### BACKGROUND OF THE INVENTION

### Field of the Invention

The present invention relates to thermally insulating polymeric foam and a process for preparing infrared attenuated thermally insulating polymeric foam.

### Description of Related Art

Thermally insulating polymeric foam is desirable for building and construction applications where interior temperatures are often preferably maintained at a temperature different from outside temperatures. Increasingly, consumer desires and government regulations require greater thermal insulation in buildings to conserve energy. Regulations also require the insulation to achieve certain flame retardant performance. A particularly challenging standard of flame retardant performance sought by insulation manufacturers, builders and customers is the German B2 fire test according to DIN 4102. Regulations are also driving a movement to environmentally friendly blowing agents from materials such as chlorofluorocarbons. Particularly desirable environmentally friendly blowing agents include water, alcohols having two or three carbons (C₂₋₃ ROHs) and carbon dioxide. Therefore, ideal thermally insulating polymeric foam has a high thermal insulating capability, passes the German B2 fire test and is prepared with a blowing agent containing one or more of water, ethanol and carbon dioxide. However, achieving this ideal polymeric foam is challenging.

Infrared attenuating agents are useful for reducing thermal conductivity through polymeric foam and thereby enhance the foam's thermally insulating character. Carbon black has historically been known as an infrared attenuating agent for use in polymeric foam. Thermal black, a particular form of carbon black that is also known as acetylene black, offers especially desirable properties for preparing thermally insulating polymeric foam (*see, for example,* WO94/13721).

Particulates such as infrared attenuating agents serve as nucleating agents during foam expansion, particularly in the presence of highly nucleating blowing agents such as carbon dioxide. As a nucleating agent, an infrared attenuating agent undesirably promotes formation of small cell sizes (less than 0.10 millimeters) in the resulting foam. However, to be most effective as thermal insulators polymeric foams requires average cell sizes of 0.12 millimeters or greater.

Carbon black also promotes bimodal cell size distributions when in combination with an aqueous blowing agent. (*see, for example,* European patent (EP) 1196486B and United States patent (USP) 5,210,105). Bimodal cell size distributions are undesirable because they reportedly make processing of polymeric foam difficult during sawing, milling, cutting and press forming *(see,* EP1196486B at paragraph 0004). EP1196486B resolves the problem of bimodal cell size distributions in thermally insulating polymeric foam by substituting graphite for carbon black. Therefore, it is still unclear how to avoid bimodal cell size distributions with a combination of water and carbon black. Moreover, graphite tends to be more problematic as a nucleator than carbon black, as illustrated in the Comparative Examples and Examples of the present specification.

Use of water as a blowing agent further causes challenges in the manufacture of thermally insulating foam. Water is known to promote "blowholes" during the foaming process. Blowholes, or pinholes, are defects the size of multiple cell diameters that can be distributed throughout a foam. Blowholes are particularly undesirable on a foam surface where they appear as surface defects. Water also tends to react with brominated flame retardants, which are necessary to achieve B2 fire performance rating, to form hydrobromic acid (HBr). HBr corrodes equipment and corrosion products accelerate further decomposition of the brominated flame retardant. Water has also been attributed to poor foam skin quality by promoting formation and migration of insoluble salts that can build up on a die lip and tear into a foam surface (*see, for example,* US20080293839).

C₂₋₃ ROHs also react with brominated flame retardants to produce HBr. Such a reaction not only produces corrosive acid but, as described above, reduces bromine available for use as a flame retardant in the polymeric foam. Extra brominated flame retardant is typically needed to account for bromine consumed by reactions with water and/or C₂₋₃ ROHs to achieve the desired B2 fire performance rating. C₂₋₃ ROHs present a further challenge in preparing polymeric foam that achieves the B2 fire performance rating due to the fact that C₂₋₃ ROHs are flammable. Therefore, the presence of C₂₋₃ ROHs in polymeric foam can increase the foam's flammability. C₂₋₃ ROHs, then, compete with achieving a B2 fire performance rating by increasing the flammability of the foam and by consuming brominated flame retardant in generating HBr.

Use of carbon dioxide as a blowing agent also offers challenges. Carbon dioxide is a strongly nucleating blowing agent that promotes small cell sizes. Formation of small cell sizes is undesirable when manufacturing thermally insulating polymeric foam, as already noted above. Carbon dioxide tends to have a low solubility in polymers such as polystyrene and, as a result, tends to rapidly escape during the foaming process. Rapid escape of carbon dioxide can cause defects on the foam surface as the carbon dioxide rapidly bursts through the surface.

Despite these challenges, it is desirable and would advance the art of thermally insulating polymeric foam to find a way to manufacture thermally insulating polymeric foam using the environmentally acceptable blowing agents of water, C₂₋₃ ROHs and carbon dioxide and that contains infrared attenuating agents such as carbon black and graphite. Moreover, it is desirable to be able to prepare such foam that achieves the German B2 fire test rating and that has a unimodal cell size distribution and an average cell size of 0.12 millimeters or greater. Still more, it is desirable if the foam would have a good surface quality.

US 2009/117358 discloses extruded polymer foams prepared using brominated fatty acids, an ester, amide or ester-amide of a brominated fatty acid, a glyceride of one or more brominated fatty acids, or a polymerized brominated fatty acid as a flame retardant additive.

### BRIEF SUMMARY OF THE INVENTION

The present invention solves a problem of discovering a specific combination of components that enables formation of extruded polymeric foam using a blowing agent comprising water and/or C₂₋₃ ROH in combination with carbon dioxide and that contains infrared attenuating agent, that has a monomodal cell size distribution, an average cell size of 0.12 millimeters or greater, a high thermal insulating capability, passes the German B2 fire test and that can have a good surface quality. The present invention surprisingly can utilize carbon black, even thermal black as the infrared attenuating agent, solving a problem of including infrared attenuators without the aforementioned detrimental affects on the resulting polymeric foam. Even more surprising, embodiments of the present invention solve nucleating problems associated with graphite by employing petroleum coke (petcokes) instead of naturally occurring graphite. Petcokes are calcined petroleum coke products that display similar properties to natural graphite. Petcokes are derived, for example, from refinery coking processes. Petcoke suitable for the present invention has a particle size that is 20 microns or less, preferably a particle size in a range of two to four microns inclusive on endpoints. Petcoke particles are typically platelet in shape and size generally corresponds to the average diameter of the platelet.

In a first aspect, the present invention is a process for preparing extruded polymeric foam comprising providing a foamable polymer composition at an initial pressure and temperature in an extruder and then extruding the foamable polymer composition into an atmosphere of lower pressure than the initial pressure and allowing the foamable polymer composition to expand into polymeric foam; wherein the foamable polymer composition comprises: (a) a thermoplastic polymer matrix comprising a polymer component that contains all the polymers in the thermoplastic polymer matrix; (b) a blowing agent composition dispersed within the thermoplastic polymer matrix, the blowing agent composition comprising 3 to 5 weight-percent carbon dioxide, up to 5 wt% alcohol having 2-3 carbons, up to 0.7 wt% water and up to 2.5 weight-percent iso-butane; wherein the blowing agent comprises at least 0.1 weight-percent of water and/or alcohol having 2-3 carbons; (c) two weight-percent or more and five weight-percent or less of an infrared attenuating agent dispersed within the thermoplastic polymer matrix, the infrared attenuating agent selected from a group consisting of carbon black having an average particle size of 100-700 nanometers and petcokes; (d) 2.5 to 3.5 weight-percent of a brominated flame retardant dispersed within the thermoplastic polymer matrix, wherein the brominated flame retardant is selected from hexabromocyclododecane (HBCD), brominated polystyrene, brominated butadiene and brominated styrene-butadiene copolymers; and (e) at least 0.1 weight-percent of epoxy stabilizer dispersed within the polymer matrix; where all weight-percents are relative to total polymer component weight, wherein at least 50 weight-percent of the polymer component is alkenyl aromatic polymer and wherein the resulting polymeric foam is characterized by having a density in a range of 30 to 37 kilograms per cubic meter, a unimodal cell size distribution with an average cell size in a range of greater than 0.15 and 0.4 millimeters or less, a thermal conductivity in a range of 28 to 35 milliwatts per meter*Kelvin and that passes the German B2 fire test.

In a second aspect, the present invention is a polymeric foam comprising: (a) a thermoplastic polymer matrix comprising a polymer component that contains all the polymers in the thermoplastic polymer matrix and having cells dispersed therein; (b) two weight-percent or more and five weight-percent or less of an infrared attenuating agent dispersed within the thermoplastic polymer matrix, the infrared attenuating agent selected from a group consisting of carbon black having an average particle size of 100-700 nanometers and petcokes; (c) 2.5 to 3.5 weight-percent of a brominated flame retardant dispersed within the thermoplastic polymer matrix, wherein the brominated flame retardant is selected from hexabromocyclododecane (HBCD), brominated polystyrene, brominated butadiene and brominated styrene-butadiene copolymers; and (d) at least 0.1 weight-percent of epoxy stabilizer dispersed within the polymer matrix; where weight parts is relative to total polymer component weight, wherein the polymer component is at least 50 weight-percent alkenyl aromatic polymer and wherein the polymeric foam is characterized by having a density in a range of 30 to 37 kilograms per cubic meter, a unimodal cell size distribution with an average cell size in a range of 0.1 to 0.4 millimeters, a thermal conductivity in a range of 28 to 35 milliwatts per meter*Kelvin and that passes the German B2 fire test.

This specific combination of components in the invention appears to be necessary to achieve desirable thermally insulating polymeric foam using infrared attenuating agent, water and/or C₂₋₃ ROH with carbon dioxide, particularly such a polymeric foam comprising polystyrene polymer.

The process of the present invention is useful for preparing the foam of the present invention. The foam of the present invention is particularly useful as thermal insulation in, for example, building and construction applications.

### DETAILED DESCRIPTION OF THE INVENTION

All ranges include endpoints unless otherwise noted.

ASTM refers to American Society for Testing and Materials. ISO refers to International Organization for Standardization. EN refers to European Norm. DIN refers to Deutsches Institute für Normung e.V. ASTM, ISO, EN and DIN test methods refer to the method as of the year in the hyphenated suffix in the method number or, if there is no hyphenated suffix, the most recent method published prior to the priority date of the present specification.

"Softening temperature" (Tₛ) for a polymer or polymer composition having as polymer components only one or more than one semi-crystalline polymer is the melting temperature for the polymer composition.

"Melting temperature" (Tₘ) for a semi-crystalline polymer is the temperature half-way through a crystalline-to-melt phase change as determined by differential scanning calorimetry (DSC) upon heating a crystallized polymer at a specific heating rate. Determine Tₘ for a semi-crystalline polymer according to the DSC procedure in ASTM method E794-06. Determine Tₘ for a combination of polymers and for a filled polymer composition also by DSC under the same test conditions in ASTM method E794-06. If the combination of polymers or filled polymer composition only contains miscible polymers and only one crystalline-to-melt phase change is evident in its DSC curve, then Tₘ for the polymer combination or filled polymer composition is the temperature half-way through the phase change. If multiple crystalline-to-melt phase changes are evident in a DSC curve due to the presence of immiscible polymers, then Tₘ for the polymer combination or filled polymer composition is the Tₘ of the continuous phase polymer. If more than one polymer is continuous and they are not miscible, then the Tₘ for the polymer combination or filled polymer composition is the lowest Tₘ of the continuous phase polymers.

"Softening temperature" (Tₛ) for a polymer or polymer composition having as polymer components only one or more than one amorphous polymer is the glass transition temperature for the polymer composition.

"Glass transition temperature" (T_{g}) for a polymer or polymer composition is as determined by DSC according to the procedure in ASTM method E1356-03. Determine T_{g} for a combination of polymer and for a filled polymer composition also by DSC under the same test conditions in ASTM method E1356-03. If the combination of polymer or filled polymer composition only contains miscible polymers and only one glass transition phase change is evident in the DSC curve, then T_{g} of the polymer combination or filled polymer composition is the temperature half-way through the phase change. If multiple glass transition phase changes are evident in a DSC curve due to the presence of immiscible amorphous polymers, then T_{g} for the polymer combination or filled polymer composition is the T_{g} of the continuous phase polymer. If more than one amorphous polymer is continuous and they are not miscible, then the T_{g} for the polymer composition or filled polymer composition is the lowest T_{g} of the continuous phase polymers.

If the polymer composition contains a combination of semi-crystalline and amorphous polymers, the softening temperature of the polymer composition is the softening temperature of the continuous phase polymer or polymer composition. If the semi-crystalline and amorphous polymer phases are co-continuous, then the softening temperature of the combination is the lower softening temperature of the two phases.

Thickness, width and length, when in reference to an extruded polymeric foam, refer to three mutually orthogonal dimensions of the extruded polymeric foam. Extruded polymeric foams are extruded from an extruder in an extrusion direction. Length is a dimension of the extruded polymeric foam that extends parallel to the extrusion direction of the foam. Width is generally greater than the thickness dimension in magnitude and both are mutually orthogonal to the length. The thickness of foam extends perpendicular to a primary surface of the foam.

Polymeric foams have at least one primary surface. The primary surface of extruded polymeric foam is a surface of the extruded polymeric foam that has a planar surface area equal to the highest planar surface area of any surface of the polymeric foam. A planar surface area is the surface area as projected onto a plane so as to neglect peaks and valleys in the surface. Polymeric foams can have more than one primary surface. Polymeric foams having circular or oval cross sections have only one surface, which is by default the primary surface of the foam.

Polymeric foam desirably has a unimodal cell size distribution in order to optimize thermal insulating properties. Polymeric foam has a unimodal cell size distribution if a plot of cell size (rounded to the nearest 0.02 millimeter) versus number of cells displays a single peak. A "peak" is a point on a plot that has at least three points with a lower y-axis value both prior to and after it, progressing along the plot's x-axis, before there is a point having a higher y-axis value. A peak can comprise more than one point of equal y-axis values (a plateau), provided the point on either side of the plateau (progressing along the plot's x-axis) has a lower y-axis value than the points comprising the plateau. The plot should contain characterizations of at least 100 cells randomly selected from a complete cross section of the extruded polymeric foam. Use the average of the largest and smallest cell diameter as the cell size for a given cell.

The process of the present invention is an extrusion process that produces the polymeric foam of the present invention. The process of the present invention includes the following steps of a general extrusion process: (1) providing a foamable polymer composition comprising a polymer matrix and a blowing agent at an initial pressure and temperature in an extruder; (2) expelling the foamable polymer composition into an atmosphere of lower pressure than the initial pressure; and (3) allowing the foamable polymer composition to expand into a polymeric foam.

The polymer matrix of the foamable polymer composition comprises at least one polymer and can contain a combination of more than one polymer and more than one type of polymer. The polymers in the polymer matrix make up a polymer component of the foamable polymer composition. Alkenyl aromatic polymers account for 50 weight-percent (wt%) or more, and can account for 80 wt% or more, 90 wt% or more and even 100 wt% of the total weight of the polymer component. Preferably, the alkenyl aromatic polymers are selected from a group consisting of styrene homopolymers and copolymers. Particularly desirable styrene copolymers include styrene-acrylonitrile copolymer. In one particularly desirable embodiment styrene homopolymer accounts for 50 wt% or more, preferably 75 wt% or more, still more preferably 85 wt% or more and can account for up to and including 100 wt% of the total weight of polymers in the polymer matrix (*that is*, of the polymer component).

The polymer matrix also includes an infrared attenuating agent. The infrared attenuating agent is selected from carbon black and petcokes. Desirably, carbon black is present at a concentration of greater than two wt% when used while petcokes can still be desirable at two wt% or more. The infrared attenuator can be present at a concentration of three wt% or more, even four wt% or more. The infrared attenuator is typically present at a concentration of five wt% or less. At a concentration of less than two wt% the additive generally offers to little of an effect on thermal conductivity to be worthwhile. At a concentration greater than five wt% the additive does not affect thermal conductivity much more with increased concentration yet increases the cost of the foam and challenges with foam manufacturing and physical properties.

A particularly desirable carbon black infrared attenuator is thermal black. Thermal black is a product of gaseous hydrocarbon pyrolysis in a chamber in an absence of air. Thermal black particles tend to be spherical or nearly spherical (as opposed to, *for example,* graphite which has a plate-like shape). The infrared attenuating agent decreases thermal conductivity through a foam of the present invention.

The infrared attenuating agent has an average particle size in a range of 100 nanometers (nm) or more and 50,000 nm or less, typically 10,000 nm or less, 1,000 nm or less and can be 700 nm or less. Infrared attenuating agents having an average particle size below 100 nm tend to agglomerate, hindering effective dispersion within the polymer matrix. Particle sizes above 50,000 nm tend to undesirably induce formation of an open cell structure in the resulting polymeric foam.

The polymer matrix further includes a brominated flame retardant selected from hexabromocyclododecane (HBCD), brominated polystyrene, brominated butadiene and brominated styrene-butadiene copolymers. The brominated flame retardant is present in the polymer matrix at a concentration of 2.5 wt% or more, preferably three wt% or more and is desirably present at a concentration of 3.5 wt% or less based on total polymer component weight. A concentration of 2.5 wt% or more is necessary to achieve the B2 rating in the German flame test. A concentration of 3.5 wt% or less is desirable in order to keep cost of production reasonable.

The polymer matrix still further includes an organo-epoxy stabilizer based on total polymer component weight dispersed within the polymer matrix. Most epoxy-containing organic compounds are suitable organo-epoxy stabilizers. Brominated aromatic epoxy resins are preferable because they are less likely to plasticize the polymer component than other organo-epoxy stabilizers. Examples of brominated aromatic epoxy resins include, but are not limited to, epoxy resins based on tetrabromobisphenol A, such as F2200HM (ICL Industrial Products) and DEN 439 (The Dow Chemical Co.). Non-brominated novolac based epoxy resins are also suitable and include Araldite™ ECN-1273 and ECN-1280, (Araldite is a trademark of Huntsman Advance Materials Americas, Inc.). Useful aliphatic epoxy materials include propylene oxide and aliphatic based epoxy resins, for example, Plas-chek™ 775 aliphatic epoxy resin (Plas-chek is a trademark of Ferro Chemical Co). Desirably, the organo-epoxy stabilizer is an epoxy cresol novolac.

The organo-epoxy stabilizer is present at a concentration of at least 0.1 wt% based on total polymer component weight. Generally, the concentration of organo-epoxy stabilizer is 0.3 wt% or less based on total polymer component weight because it offers little improvement above that concentration.

The polymer matrix can further comprise additional additives such as those common in polymer foams. Examples of suitable additives include any one or any combination of more than one of the following: clays such as natural absorbent clays *(for example,* kaolinite and montmorillonite) and synthetic clays; nucleating agents *(for example,* talc and magnesium silicate); lubricants *(for example,* calcium stearate and barium stearate); and cell size enlargers such as low density polyethylene.

The blowing agent of the foamable polymer composition comprises, and can consist of carbon dioxide and one or both of water and C₂₋₃ ROHs. Carbon dioxide and water are environmentally acceptable blowing agents and the use of these blowing agents minimizes the environmental impact in manufacturing extruded polymeric foam. Surprisingly, the detrimental effects that carbon dioxide, water and C₂₋₃ ROHs have historically had on extruded polymeric foam are not evident in foam prepared by the present process as a result of using the presently claimed combination of components in the foamable polymer composition.

Carbon dioxide is present in the foamable polymer composition at a concentration in a range of three wt% or more and five wt% or less, preferably four wt% or less based on total polymer component weight. In addition to carbon dioxide, the blowing agent comprises at least one component selected from water and C₂₋₃ ROHs. Of the C₂₋₃ ROHs, ethanol is the most desirable and iso-propanol is also typical.

Water is typically present in the foamable polymer composition at a concentration in a range of 0.1 wt% or more, preferably 0.3 wt% or more and 0.7 wt% or less, typically 0.5 wt% or less based on total polymer component weight. Water can be absent if one or more than one C₂₋₃ ROH is present.

One or more than one C₂₋₃ ROH can be present in addition to or instead of water. The concentration of C₂₋₃ ROHs is generally 0.1 wt% or more, preferably 0.3 wt% or more and typically 5 wt% or less, and generally 3 wt% or less, 1 wt% or less, 0.7 wt% or less, or even 0.5 wt% or less based on total polymer component weight. C₂₋₃ ROHs can be absent if water is present.

Desirably, the blowing agent further comprises iso-butane. Iso-butane is desirable to reduce thermal conductivity and density of the polymeric foam. However, including iso-butane as a blowing agent decreases the flame retardancy of the resulting polymeric foam (*that is,* makes the foam more flammable). Nonetheless, the inventive selection of components in the present foamable polymer composition and resulting polymeric foam still enable the resulting polymeric foam to achieve a B2 rating in the German flame test. The foamable polymer composition can be free of iso-butane or can contain 0.5 wt% or more and 2.5 wt% or less, preferably 1.8 wt% or less iso-butane based on total polymer component weight.

The blowing agent may further comprise additional blowing agents besides water, C₂₋₃ ROHs, carbon dioxide and iso-butane. Additional blowing agents include ketones and ethers as well as saturated and unsaturated hydrofluorocarbons, particularly hydrofluorocarbons having a global warming potential of less than 150, preferably 75 or less, more preferably 50 or less, still more preferably 25 or less. The blowing agent can also be free of blowing agents other than water, C₂₋₃ ROHs, carbon dioxide and iso-butane.

In its broadest aspect, the process of the present invention is independent of the extrusion process used to prepare and expel the foamable polymer composition from an extruder. An artisan recognizes that there are many suitable extrusion processes for preparing polymeric foam including plank extrusion methods, stranded foam methods, continuous extrusion methods, and accumulator-extruder methods. All of these methods are suitable for use with the foamable composition just described to form the extrusion process of the present invention.

One general method for providing a foamable polymer composition in an extruder is as follows. Feed polymer in pelletized form into an extruder with the extruder barrel at a temperature higher than the softening temperature of the polymer composition in the polymer pellets. Additives, including any one or combination of more than one of the infrared attenuator, stabilizer and flame retardant, can be included in the polymer pellets, added with the pellets into the extruder or added to the extruder downstream from the addition of the polymer pellets. Mix the polymer, infrared attenuator, stabilizer, flame retardant and any other additives to form a homogeneously mixed composition, desirably prior to adding the blowing agent. It is common to add blowing agent to the softened polymer downstream from adding the polymer by injecting one or more than one blowing agent into the softened polymer in the extruder at a pressure that is at or exceeds the initial pressure. The extruder then can mix the blowing agent(s) into the softened polymer. Blowing agent can also reside in the polymer pellets prior to adding the pellets to an extruder, typically in the form of a chemical blowing agent.

The present process requires expelling the foamable polymer composition from the extruder into an environment of lower pressure than the initial pressure and then allowing the foamable polymer composition to expand into polymeric foam. The foamable polymer composition can be heated or cooled prior to expelling provided it is not cooled below the softening temperature of the foamable composition, preferably below the softening temperature of the polymer composition in the foamable composition. It is common to expel the foamable polymer composition from an extruder through a foaming die into atmospheric pressure. The foaming die has an opening through which the foam passes that defines the general shape of the resulting polymeric foam. The die opening can have any shape including rectangular, square, round, oval or even a non-symmetric shape. The foaming die can have multiple openings so that the foamable polymer composition exits the foaming die as multiple strands, multiple sheets, or any combination of shapes.

The foamable composition cools as it expands. Cooling can occur with or without affirmative application of a cooling medium *(for example,* chilled air or contact with cooled plates) or an annealing medium *(for example,* warmed air or contact with warmed plates). Often, cooling occurs without affirmative application of a cooling medium by, *for example,* evaporative cooling as blowing agents evaporate. As the foamable polymer composition cools it dimensionally stabilizes into a final extruded polymeric foam.

The process of the present invention prepares extruded polymeric foam of the present invention. The extruded polymeric foam forms from the foamable polymer composition of the process aspect of the present invention so many of the characteristics of the foamable polymer composition are also characteristics of the extruded polymeric foam. The extruded polymeric foam comprises a thermoplastic polymer matrix having cells dispersed therein. The thermoplastic polymer matrix is as described for the thermoplastic polymer matrix of the foamable polymer composition and includes a polymer component that accounts for all of the polymer components in the thermoplastic polymer matrix as also described for the foamable polymer composition. The thermoplastic polymer matrix further comprises an infrared attenuating agent, brominated flame retardant and epoxy stabilizer in concentrations and as characterized for the foamable polymer composition.

Characteristic properties of the resulting extruded polymeric foam illustrate the surprising result produced by the specific combination of components used to prepare the extruded polymeric foam. For simplicity herein, reference to "the extruded polymeric foam" refers to the resulting extruded polymeric foam from the process of the present invention as well as polymeric foam of the present invention.

The extruded polymeric foam desirably has a density of 37 kilograms per cubic meter (kg/m³) or less. Lower densities are desirable for lower cost foam and ease of handling. Typically the extruded polymeric foam has a density of 30 kg/m³ or higher and can have a density of 32 kg/m³ or higher, 33 kg/m³ or higher, 34 kg/m³ or higher, 35 kg/m³ or higher and even 36 kg/m³ or higher. Measure density of an extruded polymeric foam according to the method of ISO 845-95. Polymeric foam having a density below 30 kg/m³ tends to suffer from poor dimensional and mechanical properties *(for example,* compressive strength).

The extruded polymeric foam can, and desirably does, have a unimodal cell size distribution. Polymeric foams having a unimodal cell size distribution typically have lower thermal conductivities than polymeric foams having a multimodal cell size distribution.

The extruded polymeric foam has an average cell size of 0.12 millimeter (mm) or larger, and can have an average cell size of 0.2 mm or larger, 0.3 mm or larger and even 0.4 mm or larger. The polymeric foam can and desirably does have an average cell size of 0.5 mm or smaller. Polymeric foams having an average cell size in a range of 0.12 mm to 0.5 mm tend to be ideal for minimizing thermal conductivity through the polymeric foam. Measure average cell size for a polymeric foam according to ASTM method D-3576.

The foam is desirably and generally a closed cell foam having an open cell content of less than 30%, preferably 20% or less, more preferably 10% or less, still more preferably 5% or less, even more preferably 2% or less and can have an open cell content of 0%. Determine open cell content according to ASTM method D6226-05.

The extruded polymeric foam has a thermal conductivity of 35 milliwatts per meter-Kelvin (mW/m*K) or less, preferably 33 mW/m*K or lower, more preferably 31 mW/m*K or lower, still more preferably 30 mW/m*K or lower and most preferably 29 mW/m*K or lower. Generally, the extruded polymeric foam has a thermal conductivity of 28 mW/m*K or higher. Measure thermal conductivity of polymeric foam according to test method EN 8301.

The extruded polymeric foam can and generally does have a high quality surface appearance. A foam has a "high quality surface appearance" if 98% or more, preferably 99% or more, most preferably 100% of any 200 square-centimeter portion of any primary surface of the foam that is centered on the foam's primary surface and extending to 80% of the foam's width is free of defects. A "defect" is a discontinuity in polymer that provides access to more than one cell of the foam through a primary surface of the polymer foam. Defects are apparent directly out of the foaming die and are distinct from intentionally milled grooves or slices introduced into foam after a foaming die.

The extruded polymeric foam performs well enough in the German B2 fire test according to DIN 4102 to achieve a B2 rating in the fire test.

### Examples

The following examples serve to illustrate embodiments of the present invention.

### Comparative Example A and Example 1: Large Graphite Versus Small Carbon Black

Prepare a foamable polymer composition by combining 80 pph 140,000 g/mol Mw polystyrene homopolymer, 20 pph 200,000 g/mol Mw polystyrene homopolymer, 2 pph infrared attenuating agent (*see* below for type) and 0.4 pph low density polyethylene (DOWLEX® SC 2107, DOWLEX is a trademark of The Dow Chemical Company), 0.2 pph barium stearate, 0.25 pph epoxy cresol novolac 1280, and 2.5 pph of hexabromocyclododecane into a single screw extruder and heat to form a melt and then inject 3 pph carbon dioxide, 0.63 pph water and 1.5 pph iso-butane at 180 bar and 200 °C. All references to pph in the examples are weight parts per hundred based on total polymer weight. Feed the polymer at a rate of sixty kilograms per hour. Mix the foamable polymer composition and then adjust its temperature to 125 ° C and its pressure to approximately 90 bar. Expel the foamable polymer composition into an environment of one atmosphere of pressure and 23°C through a slit die (foaming die) having a 50 mm width and thickness just small enough to prevent pre-foaming. Allow the foamable polymer composition to expand into a polymeric foam as it passes through a calibrator to form a polymeric foam having a width of 13-15 cm and a thickness of 20-35 mm.

The infrared attenuating agent for Comp Ex A has a larger average particle size than the carbon black used for Ex 1. Use UF1 grade natural graphite from Kropfmuel AG (average particle size of 3000 nm) for Comp Ex A. Use Thermax™ NT-991 (Thermax is a trademark of Cancarb), which has an average particle size of 280 nanometers, for the Ex 1. Comp Ex A has a density of 37.3 kg/m³, an average cell size of 0.1 mm, a thermal conductivity of 28.9 milliwatts per meter*Kelvin, a width of 13.2 centimeters and a thickness of 23 millimeters. Ex 1 has a density of 33.6 kg/m³, an average cell size of 0.3 mm a thermal conductivity of 31.3 milliwatts per meter*Kelvin, a width of 15 centimeters and a thickness of 32 millimeters. Both Comp Ex A and Ex 1 pass the B2 Flame Test and have monomodal cell size distributions.

Notably, at equal loading levels based on weight (in this case, 2 pph) a larger number of the smaller particle sized infrared attenuating agent would be is present in the foamable composition - offering more nucleating sites during foaming. More nucleating sites typically leads to a greater extent of nucleation, which yields higher density and smaller cell sizes due to foam collapse. However, unexpectedly, the smaller carbon black (280 nm) produced lower density and large average cell sized foam than the larger particle sized graphite (3000 nm). The graphite containing foam has a density larger than is desirable (>37 kg/m³) and an average cell size smaller than is desirable (150 nm and smaller). Comp Ex A and Ex 1 illustrate that carbon black is less nucleating than graphite at equal loading levels - even when graphite has an order of magnitude larger particle size and is present in fewer numbers.

### Comparative Examples B-F and Examples 2-4:

### Large Graphite Versus Small Carbon Black with Different Blowing Agent Compositions

Prepare Comparative Example B-F and Examples 2-4 in like manner as Comparative Example A except use the blowing agent composition and infrared attenuating agent as identified in Table 1. The 3000 nm infrared attenuating agents are the same graphite as in Comparative Example A. The 280 nm infrared attenuating agents are carbon black as in Example 1. Resulting foam properties are also identified in Table 1. Herein: CO₂ is carbon dioxide, iC₄ is iso-butane, EtOH is ethanol, H₂O is water, K-Value is thermal conductivity, W is foam width and T is foam thickness. Measure density according to ISO 845-95, cell size according to ASTM method D-3576 and Thermal Conductivity (k-value) according to EN8301. Each foam has a monomodal cell size distribution and passes the B2 flame test.

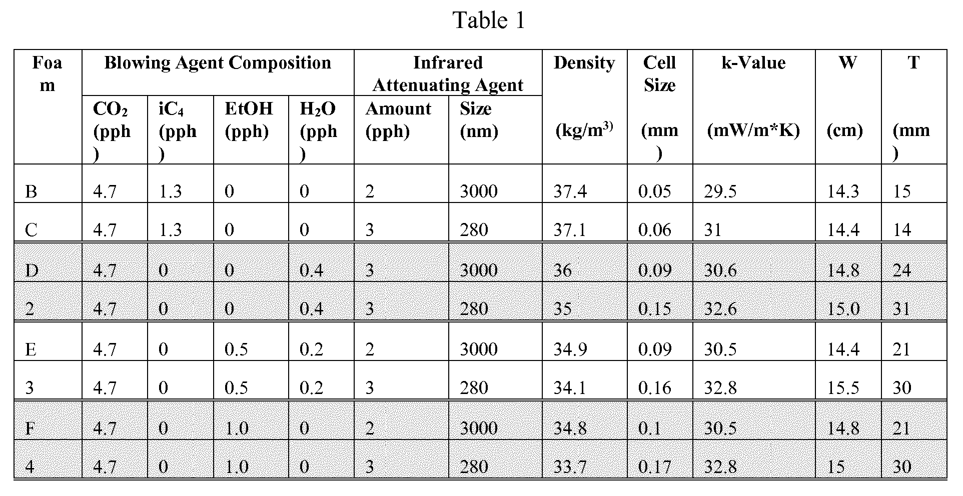

These foams illustrate a number of aspects in support of the surprising results of the present invention.

Comparative Examples B and C illustrate that use of a blowing agent consisting of carbon dioxide and iso-butane (iC₄) is insufficient to produce a desirable density or cell size in the presence of either the large graphite or the smaller carbon black infrared attenuators.

Comparative Example D and Example 2 illustrate that use of carbon dioxide with water is unable to make a foam having a desirable cell size with the larger graphite yet is capable of producing a foam having desirable density and cell size using the smaller carbon black additive. In fact, a larger amount of the carbon black additive is present and yet nucleation does not negatively impact the foam like the larger graphite. The smaller thickness (T) of the graphite foam is consistent with the assumption that the graphite nucleates to a greater extent and results in foam collapse and concomitant density increase and cell size decrease in the final foam.

Similar observations are apparent between Comparative Example E and Example 3 as well as Comparative Example F and Example 4. These foams utilize different blowing agent compositions within the scope of the present process and produce foams having desirable properties with the smaller carbon black but not the larger graphite additive.

### Comparative Example G and Examples 5-10: Petcokes as Infrared Attenuator

Prepare Comparative Example G and Examples 5-10 in like manner as Comparative Examples A, B and D-F except use the blowing agent composition identified in Table 2 and instead of 3000 nm graphite use 3000 nm petcoke (grade HC59803 from H.C. Carbon in Germany) as the infrared attenuating additive at 2 pph loading. Petcoke is a man-made graphite as opposed to the naturally occurring graphite used in Comparative Examples A, B and D-F. Table 2 identifies the resulting polymeric foam properties expected for Comparative Example G and Examples 5-10. Each foam has a monomodal cell size distribution and passes the B2 flame test.

**Table 3.**

| **Foam** | **Blowing Agent Composition** | | | | **Infrared Attenuating Agent (Petcokes)** | | **Density** | **Cell Size** | **k-Value** | **W** | **T** |
|---|---|---|---|---|---|---|---|---|---|---|---|
| | **CO₂ (pph** ) | **iC₄ (pph** ) | **EtOH (pph)** | **H₂O (pph** ) | **Amount (pph)** | **Size (nm)** | **(kg/m³)** | **(mm )** | **(mW/m*K)** | **(cm)** | **(cm)** |
| G | 4.7 | 1.3 | 0 | 0 | 2 | 3000 | 38 | 0.05 | 30.8 | 14 | 15 |
| 5 | 4.7 | 0.7 | 0.5 | 0 | 2 | 3000 | 34.6 | 0.13 | 31.4 | 14.6 | 23 |
| 6 | 3.5 | 1.5 | 0 | 0.4 | 2 | 3000 | 33.7 | 0.16 | 30.1 | 14.2 | 27 |
| 7 | 4.7 | 0 | 1 | 0 | 2 | 3000 | 34 | 0.15 | 32 | 14.3 | 26 |
| 8 | 4.7 | 0 | 0 | 0.4 | 2 | 3000 | 34.3 | 0.14 | 31.9 | 14.1 | 27 |
| 9 | 4.7 | 0 | 0.5 | 0.2 | 2 | 3000 | 34.3 | 0.13 | 31.9 | 14.1 | 25 |
| 10 | 1.5 | 0 | 1 | 0.15 | 2 | 3000 | 31.2 | 0.2 | 32.1 | 13.7 | 33 |

Comp Ex G illustrates that use of CO₂ and iso-butane alone is insufficient to preclude collapse of foam resulting in high density and small cell size in the presence of 2 pph 3000 nm Petcokes. This is similar to Comp Ex B, which employed 2 pph 3000 nm natural graphite. However, unlike natural graphite, the 3000 nm petcokes produced good quality foam with CO₂ and one or both of water and ethanol. Contrast that to Comp Exs E and F using 3000 nm natural graphite. In particular, compare Ex 7 with Comp Ex F and Ex 9 with Comp Ex E. This data illustrates the surprising performance of petcokes relative to natural graphite of similar size and loading in the ability to prepare low density (37 kg/m³ or less) and small cell size (0.12 mm or less) foam that passes B2 flame test.

## Claims

1. A process for preparing extruded polymeric foam comprising providing a foamable polymer composition at an initial pressure and temperature in an extruder and then extruding the foamable polymer composition into an atmosphere of lower pressure than the initial pressure and allowing the foamable polymer composition to expand into polymeric foam; wherein the foamable polymer composition comprises:
a. a thermoplastic polymer matrix comprising a polymer component that contains all the polymers in the thermoplastic polymer matrix;
b. a blowing agent composition dispersed within the thermoplastic polymer matrix, the blowing agent composition comprising 3 to 5 weight-percent carbon dioxide, up to 5 wt% alcohol having 2-3 carbons, up to 0.7 wt% water and up to 2.5 weight-percent iso-butane; wherein the blowing agent comprises at least 0.1 weight-percent of water and/or alcohol having 2-3 carbons;
c. two weight-percent or more and five weight-percent or less of an infrared attenuating agent dispersed within the thermoplastic polymer matrix, the infrared attenuating agent selected from a group consisting of carbon black having an average particle size of 100-700 nanometers and petcokes;
d. 2.5 to 3.5 weight-percent of a brominated flame retardant dispersed within the thermoplastic polymer matrix, wherein the brominated flame retardant is selected from hexabromocyclododecane (HBCD), brominated polystyrene, brominated butadiene and brominated styrene-butadiene copolymers; and
e. at least 0.1 weight-percent of epoxy stabilizer dispersed within the polymer matrix;
where all weight-percents are relative to total polymer component weight, wherein at least 50 weight-percent of the polymer component is alkenyl aromatic polymer and wherein the resulting polymeric foam is **characterized by** having a density in a range of 30 to 37 kilograms per cubic meter, a unimodal cell size distribution with an average cell size in a range of greater than 0.15 and 0.4 millimeters or less, a thermal conductivity in a range of 28 to 35 milliwatts per meter*Kelvin and that passes the German B2 fire test.

2. The process of Claim 1, wherein the infrared attenuating agent comprises at least two weight-percent petcokes, more than two weight-percent carbon black or both.

3. The process of Claim 1, wherein the alkenyl aromatic polymer is polystyrene homopolymer.

4. The process of Claim 1, wherein the blowing agent composition comprises iso-butane in a concentration range of 0.5 to 1.5 weight-percent based on total polymer component weight.

5. The process of Claim 1, wherein the epoxy stabilizer is epoxy cresol novolac.

6. A polymeric foam comprising:
a. a thermoplastic polymer matrix comprising a polymer component that contains all the polymers in the thermoplastic polymer matrix and having cells dispersed therein;
b. two weight-percent or more and five weight-percent or less of an infrared attenuating agent dispersed within the thermoplastic polymer matrix, the infrared attenuating agent selected from a group consisting of carbon black having an average particle size of 100-700 nanometers and petcokes;
c. 2.5 to 3.5 weight-percent of a brominated flame retardant dispersed within the thermoplastic polymer matrix, wherein the brominated flame retardant is selected from hexabromocyclododecane (HBCD), brominated polystyrene, brominated butadiene and brominated styrene-butadiene copolymers; and
d. at least 0.1 weight-percent of epoxy stabilizer dispersed within the polymer matrix;
where weight parts is relative to total polymer component weight, wherein the polymer component is at least 50 weight-percent alkenyl aromatic polymer and wherein the polymeric foam is **characterized by** having a density in a range of 30 to 37 kilograms per cubic meter, a unimodal cell size distribution with an average cell size in a range of 0.1 to 0.4 millimeters, a thermal conductivity in a range of 28 to 35 milliwatts per meter*Kelvin and that passes the German B2 fire test.

7. The polymeric foam of Claim 6, wherein the infrared attenuating agent comprises at least two weight-percent petcokes, more than two weight-percent carbon black or both.

8. The polymeric foam of Claim 6, wherein the alkenyl aromatic polymer is polystyrene homopolymer.

9. The polymeric foam of Claim 6, wherein the epoxy stabilizer is epoxy cresol novolac.

10. The polymeric foam of Claim 6, wherein the polymeric foam has a primary surface and 98-percent or more of any 200 square centimeters portion of the primary surface that is centered on the polymeric foam's primary surface and extending to 80 percent of the foam's width is free of defects.

## Patentansprüche

1. Ein Verfahren zum Erstellen von gespritztem Polymerschaum, das das Bereitstellen einer schäumbaren Polymerzusammensetzung bei einem Anfangsdruck und einer Temperatur in einem Extruder und dann das Extrudieren der schäumbaren Polymerzusammensetzung in eine Atmosphäre von niedrigerem Druck als dem Anfangsdruck und das Ermöglichen, dass die schäumbare Polymerzusammensetzung zu Polymerschaum expandiert, beinhaltet; wobei die schäumbare Polymerzusammensetzung Folgendes beinhaltet:
a. eine thermoplastische Polymermatrix, die eine Polymerkomponente beinhaltet, die alle der Polymere in der thermoplastischen Polymermatrix enthält;
b. eine Schaumbildnerzusammensetzung, die innerhalb der thermoplastischen Polymermatrix dispergiert ist, wobei die Schaumbildnerzusammensetzung 3 bis 5 Gewichtsprozent Kohlendioxid, bis zu 5 Gew.-% Alkohol mit 2-3 Kohlenstoffen, bis zu 0,7 Gew.-% Wasser und bis zu 2,5 Gew.-% Isobutan beinhaltet; wobei der Schaumbildner mindestens 0,1 Gewichtsprozent Wasser und/oder Alkohol mit 2-3 Kohlenstoffen beinhaltet;
c. zwei Gewichtsprozent oder mehr und fünf Gewichtsprozent oder weniger ein Infrarot abschwächendes Mittel, das innerhalb der thermoplastischen Polymermatrix dispergiert ist, wobei das Infrarot abschwächende Mittel aus einer Gruppe ausgewählt ist, die aus Carbon Black mit einer durchschnittlichen Partikelgröße von 100-700 Nanometer und Petrolkoks besteht;
d. 2,5 bis 3,5 Gewichtsprozent ein bromierter Flammhemmer, der innerhalb der thermoplastischen Polymermatrix dispergiert ist, wobei der bromierte Flammhemmer ausgewählt ist aus Hexabromcyclododecan (HBCD), bromiertem Polystyrol, bromiertem Butadien und bromierten Styrolbutadiencopolymeren; und
e. mindestens 0,1 Gewichtsprozent Epoxidstabilisator, der innerhalb der thermoplastischen Polymermatrix dispergiert ist;
wobei alle Gewichtsprozente relativ zu dem Gesamtgewicht der Polymerkomponente sind, wobei die Polymerkomponente zu mindestens 50 Gewichtsprozent das aromatische Alkenylpolymer ist und wobei der resultierende Polymerschaum **dadurch gekennzeichnet ist, dass** er Folgendes aufweist: eine Dichte in einem Bereich von 30 bis 37 Kilogramm pro Kubikmeter, eine unimodale Zellgrößenverteilung mit einer durchschnittlichen Zellgröße in einem Bereich von größer als 0,15 und 0,4 Millimetern oder weniger, eine Wärmeleitfähigkeit in einem Bereich von 28 bis 35 Milliwatt pro Meter*Kelvin und dass er den deutschen B2-Feuertest besteht.

2. Verfahren gemäß Anspruch 1, wobei das Infrarot abschwächende Mittel mindestens zwei Gewichtsprozent Petrolkoks, mehr als zwei Gewichtsprozent Carbon Black oder beides beinhaltet.

3. Verfahren gemäß Anspruch 1, wobei das aromatische Alkenylpolymer ein Polystyrolhomopolymer ist.

4. Verfahren gemäß Anspruch 1, wobei die Schaumbildnerzusammensetzung Isobutan in einem Konzentrationsbereich von 0,5 bis 1,5 Gewichtsprozent, bezogen auf das Gesamtkomponentengewicht des Polymers, beinhaltet.

5. Verfahren gemäß Anspruch 1, wobei der Epoxidstabilisator Epoxidkresolnovolak ist.

6. Ein Polymerschaum, der Folgendes beinhaltet:
a. eine thermoplastische Polymermatrix, die eine Polymerkomponente beinhaltet, die alle der Polymere in der thermoplastischen Polymermatrix enthält und darin dispergierte Zellen aufweist;
b. zwei Gewichtsprozent oder mehr und fünf Gewichtsprozent oder weniger ein Infrarot abschwächendes Mittel, das innerhalb der thermoplastischen Polymermatrix dispergiert ist, wobei das Infrarot abschwächende Mittel aus einer Gruppe ausgewählt ist, die aus Carbon Black mit einer durchschnittlichen Partikelgröße von 100-700 Nanometer und Petrolkoks besteht;
c. 2,5 bis 3,5 Gewichtsprozent ein bromierter Flammhemmer, der innerhalb der thermoplastischen Polymermatrix dispergiert ist, wobei der bromierte Flammhemmer ausgewählt ist aus Hexabromcyclododecan (HBCD), bromiertem Polystyrol, bromiertem Butadien und bromierten Styrolbutadiencopolymeren; und
d. mindestens 0,1 Gewichtsprozent Epoxidstabilisator, der innerhalb der Polymermatrix dispergiert ist;
wobei Gewichtsteile relativ zu dem Gesamtgewicht der Polymerkomponente sind, wobei die Polymerkomponente zu mindestens 50 Gewichtsprozent das aromatische Alkenylpolymer ist und wobei der Polymerschaum **dadurch gekennzeichnet ist, dass** er Folgendes aufweist: eine Dichte in einem Bereich von 30 bis 37 Kilogramm pro Kubikmeter, eine unimodale Zellgrößenverteilung mit einer durchschnittlichen Zellgröße in einem Bereich von 0,1 bis 0,4 Millimetern, eine Wärmeleitfähigkeit in einem Bereich von 28 bis 35 Milliwatt pro Meter*Kelvin und dass er den deutschen B2-Feuertest besteht.

7. Polymerschaum gemäß Anspruch 6, wobei das Infrarot abschwächende Mittel mindestens zwei Gewichtsprozent Petrolkoks, mehr als zwei Gewichtsprozent Carbon Black oder beides beinhaltet

8. Polymerschaum gemäß Anspruch 6, wobei das aromatische Alkenylpolymer ein Polystyrolhomopolymer ist.

9. Polymerschaum gemäß Anspruch 6, wobei der Epoxidstabilisator Epoxidkresolnovolak ist.

10. Polymerschaum gemäß Anspruch 6, wobei der Polymerschaum eine Hauptoberfläche aufweist und 98 Prozent oder mehr eines beliebigen 200 Quadratzentimeter großen Teils der Hauptoberfläche, der auf der Hauptoberfläche des Polymerschaums zentriert ist und sich zu 80 Prozent der Breite des Schaums erstreckt, frei von Defekten ist.

## Revendications

1. Un procédé pour préparer une mousse de polymère extrudée comprenant le fait de fournir une composition polymère pouvant mousser à une pression et température initiales dans un extrudeur, puis le fait d'extruder la composition polymère pouvant mousser dans une atmosphère de pression inférieure à celle de la pression initiale et le fait de permettre à la composition polymère pouvant mousser de s'expanser en une mousse polymère ; dans lequel la composition polymère pouvant mousser comprend :
a. une matrice polymère thermoplastique comprenant un composant polymère qui contient tous les polymères dans la matrice polymère thermoplastique ;
b. une composition d'agent d'expansion dispersée au sein de la matrice polymère thermoplastique, la composition d'agent d'expansion comprenant de 3 à 5 pour cent en poids de dioxyde de carbone, jusqu'à 5 % en poids d'alcool ayant de 2 à 3 carbones, jusqu'à 0,7 % en poids d'eau et jusqu'à 2,5 pour cent en poids d'iso-butane ; dans lequel l'agent d'expansion comprend au moins 0,1 pour cent en poids d'eau et/ou d'alcool ayant de 2 à 3 carbones;
c. deux pour cent en poids ou plus et cinq pour cent en poids ou moins d'un agent atténuant les infrarouges dispersé au sein de la matrice polymère thermoplastique, l'agent atténuant les infrarouges étant sélectionné dans un groupe constitué de noir de carbone, ayant une taille de particule moyenne allant de 100 à 700 nanomètres, et de cokes de pétrole ;
d. 2,5 à 3,5 pour cent en poids d'un retardateur de flamme bromé dispersé au sein de la matrice polymère thermoplastique, dans lequel le retardateur de flamme bromé est sélectionné parmi l'hexabromocyclododécane (HBCD), le polystyrène bromé, des copolymères de butadiène bromé et de butadiène-styrène bromé ; et
e. au moins 0,1 pour cent en poids d'un stabilisateur époxy dispersé au sein de la matrice polymère ;
où tous les pourcentages en poids sont rapportés au poids total du composant polymère, dans lequel au moins 50 pour cent en poids du composant polymère est un polymère aromatique alcényle et dans lequel la mousse polymère résultante est **caractérisée par** le fait d'avoir une masse volumique comprise dans une gamme allant de 30 à 37 kilogrammes par mètre cube, une distribution des tailles cellulaires unimodales avec une taille cellulaire moyenne comprise dans une gamme allant de plus de 0,15 et 0,4 millimètre ou de moins, une conductivité thermique comprise dans une gamme allant de 28 à 35 milliwatts par mètre*Kelvin et qui réussit le test du feu B2 allemand.

2. Le procédé de la revendication 1, dans lequel l'agent atténuant les infrarouges comprend au moins deux pour cent en poids de cokes de pétrole, plus de deux pour cent en poids de noir de carbone ou les deux.

3. Le procédé de la revendication 1, dans lequel le polymère aromatique alcényle est un homopolymère polystyrène.

4. Le procédé de la revendication 1, dans lequel la composition d'agent d'expansion comprend l'isobutane dans une concentration comprise dans la gamme allant de 0,5 à 1,5 pour cent en poids rapporté au poids total du composant polymère.

5. Le procédé de la revendication 1, dans lequel le stabilisant époxy est le novolac crésol époxy.

6. Une mousse polymère comprenant :
a. une matrice polymère thermoplastique comprenant un composant polymère qui contient tous les polymères dans la matrice polymère thermoplastique et ayant des cellules dispersées au sein de celle-ci ;
b. deux pour cent en poids ou plus et cinq pour cent en poids ou moins d'un agent atténuant les infrarouges dispersé au sein de la matrice polymère thermoplastique, l'agent atténuant les infrarouges étant sélectionné dans un groupe constitué de noir de carbone, ayant une taille de particule moyenne allant de 100 à 700 nanomètres, et de cokes de pétrole ;
c. 2,5 à 3,5 pour cent en poids d'un retardateur de flamme bromé dispersé au sein de la matrice polymère thermoplastique, dans lequel le retardateur de flamme bromé est sélectionné parmi l'hexabromocyclododécane (HBCD), le polystyrène bromé, des copolymères de butadiène bromé et de butadiène-styrène bromé ; et
d. au moins 0,1 pour cent en poids d'un stabilisateur époxy dispersé au sein de la matrice de polymère ;
où les parties en poids sont rapportées au poids total de composant polymère, dans lequel le composant polymère est au moins 50 pour cent en poids de polymère aromatique alcényle et dans lequel la mousse polymère est **caractérisée par** le fait d'avoir une masse volumique dans une gamme allant de 30 à 37 kilogrammes par mètre cube, une distribution des tailles cellulaires unimodales avec une taille cellulaire moyenne comprise dans une gamme allant de 0,1 à 0,4 millimètre, une conductivité thermique comprise dans une gamme allant de 28 à 35 milliwatts par mètre*Kelvin et qui réussit le test du feu B2 allemand.

7. La mousse polymère de la revendication 6, dans laquelle l'agent atténuant les infrarouges comprend au moins deux pour cent de cokes de pétrole, plus de deux pour cent en poids de noir de carbone ou les deux.

8. La mousse polymère de la revendication 6, dans laquelle le polymère aromatique alcényle est l'homopolymère polystyrène.

9. La mousse polymère de la revendication 6, dans laquelle le stabilisateur époxy est le novolac crésol époxy.

10. La mousse polymère de la revendication 6, la mousse polymère ayant une surface primaire et 98 pour cent ou plus de n'importe quelle portion de 200 centimètres carrés de la surface primaire, qui est centrée sur la surface primaire de la mousse polymère et s'étend à 80 pour cent de la largeur de la mousse, est dépourvu de défauts.
